# EUROPÄISCHE PATENTSCHRIFT

(11) **EP 3 360 731 B1**
(45) Veröffentlichungstag und Bekanntmachung des Hinweises auf die Patenterteilung: **05.02.2020**
(21) Anmeldenummer: 17155555.0
(22) Anmeldetag: 10.02.2017
(51) Int. Cl.: B60R 9/058, B60R 13/04

(54) **DACHRELING**
ROOF RAIL
BARRE DE TOIT

(43) Veröffentlichungstag der Anmeldung: 15.08.2018
(73) Patentinhaber: DURA Operating, LLC, Auburn Hills, MI 48326 (US)
(72) Erfinder: RAHM, Werner, 42281 Wuppertal (DE); KAMMERTÖNS, Alexander, 58840 Plettenberg (DE)
(74) Vertreter: Bungartz Christophersen mbB

(56) Entgegenhaltungen:
- WO-A1-2014/154688
- DE-U1-202013 105 598

## Beschreibung

Die Erfindung betrifft eine Dachreling, die eingerichtet ist, an einer Dachstruktur eines Kraftfahrzeugs befestigt zu werden und die ein lastaufnehmendes Relingprofil und in wenigstens einem Teilabschnitt ein Dekorprofil zur Bildung wenigstens einer ersten seitlichen Dekorfläche umfasst.

Derartige Dachrelings ermöglichen ein optisches Kaschieren etwaiger Befestigungstechnik und bei entsprechender Ausgestaltung des Dekorprofils die optische Anpassung, etwa ein Angleichen an die Wagenfarbe, oder das optische Hervorheben, etwa durch den bewussten Einsatz eines anderen Materials, wenigstens einer Sichtfläche der Dachreling gegenüber der die Dachreling umgebenden Fahrzeugkarosserie.

Ein Dachreling gemäß dem Oberbegriff des Anspruchs 1 ist aus der DE 20 2013 105 598 U1 bekannt.

Eine Dachreling mit einem Blendenteil ist aus der Offenbarung WO 2014/154688 A1 bekannt. Nach der Befestigung eines Relingprofils an der Dachstruktur über einen Befestigungswinkel, der ein seitliches Angreifen von Befestigungsmitteln an dem Relingprofil ermöglicht, wird eine Abdeckblende seitlich auf das Relingprofil aufgesteckt, um die Befestigungsstruktur zu kaschieren. Aus der DE 20 2014 102 150 U1 ist eine Dachrelinganordnung bekannt, bei der auf eine Seitenfläche eines Relingprofils eine leistenartige Dekorblende aufgesetzt wird, die ein optisches Hervorheben einer Teilfläche eines Relingprofils ermöglicht.

In beiden Fällen erfolgt die Befestigung des Dekorteils insbesondere durch eine Rast- oder Klebeverbindung, die verhältnismäßig versagensanfällig ist und die Gestaltungsmöglichkeiten der Kombination aus einem lastaufnehmenden Relingprofil und einem Dekorprofil einschränkt. Außerdem ist die Tatsache, dass es sich bei der Dekorblende um ein lediglich aufgestecktes oder aufgeklebtes Blendenbauteil handelt, in beiden Fällen augenscheinlich, so dass der zu erzielende Qualitätseindruck eher gering ist.

Aus der DE 10 2015 212 684 B3 ist eine längsgeteilte Dachreling bekannt, die ein Oberteil und ein Unterteil umfasst. Das Unterteil ist tragender Bestandteil der Dachreling.

Aufgabe der Erfindung ist es, eine Dachreling bzw. eine Dachrelinganordnung der eingangs genannten Art zur Verfügung zu stellen, die die Möglichkeit schafft, ein sehr hochwertig anmutendes Dekor an einer Dachreling abzubilden, welches insbesondere den Eindruck zu erwecken im Stande ist, dass es sich insgesamt um lediglich ein einziges Profil aus einer Profilleiste handelt. Gleichzeitig soll eine einfache und kostengünstige Herstellbarkeit der Dachreling und eine dauerhaft sichere Befestigung des Dekorprofils gewährleistet sein. Dem Fachmann soll ein möglichst großer Grad an Freiheit bei der konstruktiven Ausgestaltung insbesondere des Dekorprofils zu Verfügung stehen.

Die Aufgabe wird erfindungsgemäß dadurch gelöst, dass das Relingprofil einen Befestigungsschenkel aufweist, an dem bei bestimmungsgemäßer Anbringung der Dachreling an der Dachstruktur lastaufnehmende Befestigungsmittel unmittelbar angreifen, um das Relingprofil an der Dachstruktur festzulegen, und das Dekorprofil über den Befestigungsschenkel lastfrei mit dem Relingprofil verbunden ist.

"Lastfrei verbunden" bedeutet in diesem Zusammenhang, dass das Dekorprofil nach bestimmungsgemäßer Anbringung der Dachreling am Kraftfahrzeug die von der Dachreling bei deren bestimmungsgemäßer Verwendung aufzunehmende Traglast nicht mit abzustützen hat. Wenn die Befestigungsmittel, mit der die Dachreling bei bestimmungsgemäßer Montage am Fahrzeug mit der Dachstruktur verbunden ist, um die Lasten in die Dachstruktur einzuleiten, so mit dem Relingprofil verbunden sind, dass das Dekorprofil lastfrei gehalten ist und daher nicht für einen Lastfall ausgelegt werden muss, kommt dies dem Konstrukteur hinsichtlich Materialauswahl, Materialstärke, Fertigungsverfahren und sonstigen die Konstruktion bestimmender Faktoren entgegen und gewährt größtmögliche Freiheiten.

Es kann vorgesehen sein, dass die Befestigungsmittel, mit dem das Relingprofil an der Dachstruktur befestigt ist, genutzt werden, um gleichzeitig auch das Dekorprofil mit dem Relingprofil zu verbinden. Insbesondere kann das Dekorprofil über die Befestigungsmittel, mit dem das Relingprofil auch an der Dachstruktur befestigt wird, an dem Relingprofil vorfixiert sein.

Der Erfindung liegt unter anderem die Überlegung zugrunde, die ohnehin hochstabil auszulegenden und optisch zu kaschierenden Befestigungsmittel, die zur Befestigung des letztlich lastaufnehmenden Relingprofils Verwendung finden, auch zur Befestigung des Dekorprofils zu verwenden.

Es ist aber auch denkbar, dass am Dekorprofil Aussparungen vorgesehen sind, durch die die Befestigungsmittel, mit denen das Relingprofil mit der Dachstruktur befestigt ist, hindurchgreifen, ohne das Dekorprofil gleichzeitig mit dem Relingprofil zu verbinden.

In beiden vorgenannte Fällen werden etwaige Lasten im Lastfall direkt vom Relingprofil in die Dachstruktur eingeleitet. Das Dekorprofil selbst wird durch an der Dachreling, genauer am Relingprofil, angebrachte Lasten nicht mit Kräften beaufschlagt. Gleichzeitig ermöglicht die Ausgestaltung, dass das Dekorprofil mit dem Relingprofil über den Befestigungsschenkel verbunden ist, der ohnehin für eine hohe Belastbarkeit ausgelegt und derart ausgebildet ist, dass etwaige Befestigungsmittel in ein einer von außen nicht sichtbaren Weise mit dem Befestigungsschenkel zusammenwirken, eine besonders sichere und optisch unauffällige Verbindung zwischen Dekor- und Relingprofil. Bei der Gestaltung des Dekorprofils kann der Konstrukteur sich so weitgehend auf dessen Dekorfunktion konzentrieren.

Um das Dekorprofil mit dem Relingprofil dauerhaft sicher zu verbinden, ist vorgesehen, dass das Dekorprofil in wenigstens dem Teilabschnitt einen Dekorprofilquerschnitt mit einem nach innen weisenden bevorzugt weitgehend horizontal ausgerichteten Montageschenkel aufweist, der am bevorzugt ebenfalls weitgehend horizontal ausgerichteten Befestigungsschenkel anliegt, gegebenenfalls unter Einbindung einer Zwischenlage. Der Montageschenkel reicht bevorzugt wenigstens bis zu der Befestigungsposition, an der die Befestigungsmittel am Befestigungsschenkel des Relingprofils angreifen, bevorzugt aber über diese Befestigungsposition hinaus.

Die Dachreling kann auf diese Weise derart ausgebildet sein, dass sie zumindest optisch den Eindruck erweckt, dass sie vollständig oder zumindest weitestgehend über ihre gesamte Länge hinweg auf der Dachaußenhaut aufliegt, wobei wenigstens in dem Teilabschnitt, in dem das Dekorprofil vorgesehen ist, ein vertikaler Abstand des Relingprofils zur Dachaußenhaut durch das Dekorprofil überbrückt wird. Es kann aber selbstverständlich auch vorgesehen sein, dass die Dachreling aufgeständert ist, also nur abschnittsweise im Bereich einer Aufständerung auf der Dachaußenhaut aufliegt. Die Dachaußenhaut kann ferner einen in Fahrzeuglängsrichtung verlaufenden Dachkanal aufweisen, der gegenüber der übrigen Dachaußenfläche eine Vertiefung ausbildet und innerhalb dem die Dachreling auf dem Grund des Dachkanals leicht versenkt angeordnet ist.

Bevorzugt weisen das Relingprofil einen Relingprofilquerschnitt und das Dekorprofil einen Dekorprofilquerschnitt auf, die sich zusammen zu einem Gesamtprofilquerschnitt mit zwei im Wesentlichen vertikal ausgerichteten und im endmontierten Zustand bevorzugt bis zur Dachaußenhaut herunterragenden Seitenflächen und einem im Wesentlichen horizontal ausgerichteten Mittelschenkel bilden, wobei der Mittelschenkel zumindest zum Teil von dem Befestigungsschenkel des Relingprofils gebildet ist. Das Gesamtprofil weist im Querschnitt demnach eine A-förmige oder H-förmige Grundform auf, wobei die H-förmige Grundform oberseitig geschlossen ist.

Bei einer derartigen Grundform ist vorgesehen, dass das Dekorprofil einen Dekorprofilquerschnitt mit einem die äußere Dekorfläche bildenden ersten Seitenschenkel aufweist, von dem ausgehend sich der Montageschenkel nach innen erstreckt. Der Seitenschenkel des Dekorprofils bildet dabei bevorzugt nur einen Teil der Gesamtseitenfläche des Gesamtprofilquerschnitts, insbesondere einen unteren Teil.

Das Relingprofil und/oder das Dekorprofil weisen bevorzugt wenigstens eine nutartige Vertiefung auf, in die ein Eingriffsschenkel des jeweils anderen Profils wenigstens zum Teil eintaucht. Hierdurch ist es möglich, den Übergang zwischen beiden Profilen optisch zu verdecken, so dass dieser nicht nachteilig in Erscheinung tritt. Es entstehen so keine unmittelbar sichtbaren (Längs-)Fugen zwischen beiden Bauteilen, in die sich über die Lebensdauer des Fahrzeugs hinweg Schmutz in von außen sichtbarer Weise absetzen könnte und die die Dachreling nach außen als mehrteiliges Bauteil erscheinen lassen würden. Außerdem kann ein derartiges Ineinandergreifen der beiden Profile stabilitätserhöhend wirken und zur gegenseitigen Lagedefinition von Relingprofil und Dekorprofil beitragen.

Ein derartiges optisches Zusammenwirken zwischen Dekorprofil und Relingprofil ist an verschiedenen Stellen der Dachreling im Bereich des Übergangs von Dekorprofil und Relingprofil denkbar. So kann etwa vorgesehen sein, dass der Montageschenkel an seinem dem ersten Seitenschenkel abgewandten Ende einen Eingriffsschenkel bildet, der in eine am Relingprofil vorgesehene und nach innen weisende und bevorzugt horizontal ausgerichtete nutartige Vertiefung oder Aufnahme eintaucht. Alternativ oder zusätzlich kann vorgesehen sein, dass am Dekorprofil eine nach außen weisende nutartige Vertiefung ausgebildet ist, in die ein am Relingprofil ausgebildeter und nach innen weisender Eingriffsschenkel eintaucht. Der am Relingprofil ausgebildete und nach innen weisende Eingriffsschenkel ist bevorzugt ebenfalls horizontal ausgerichtet.

Die beschriebene Ausgestaltung einer Dachreling ermöglicht es insbesondere auch, das Dekorprofil wenigstens in dem Teilabschnitt, in dem es vorgesehen ist, vollständig unterhalb des Relingprofils anzuordnen. Dies wiederum ermöglichst es, dass das Dekorprofil auf einer Seite einer gedachten Mittelebene M der Dachreling bzw. des Gesamtprofilquerschnitts eine erste Dekorfläche ausbildet und auf der anderen Seite der Mittelebene M des Relingprofils eine zweite Dekorfläche ausbildet.

Sofern vor- oder nachstehend Angaben zu Positionierungen, Richtungen oder Ausrichtungen der Dachreling insgesamt oder des Relingprofils oder des Dekorprofils oder zu Teilen hiervon oder beider Profile in Relation zueinander gemacht sind, so beziehen diese sich auf die Lage und den Zustand, die die Dachreling in der Gesamtheit nach ihrer bestimmungsgemäßen Montage am Fahrzeug einnimmt.

Bei dem Dekorprofil kann es sich wie auch bei dem Relingprofil um ein extrudiertes (Leicht-)Metallprofil handeln, das zur Herstellung insbesondere Biege- oder Innenhochdruckumformprozessen und/oder spanenden Bearbeitungsprozessen wie dem Fräsen zugeführt werden kann. Insbesondere das Material des Dekorprofils ist durch die gewählte Dachrelingkonstruktion, die das Dekorprofil lastfrei lässt, allerdings weitgehend frei wählbar, so dass das Dekorprofil außer aus dem bevorzugten Leichtmetall (Aluminium-Legierung) insbesondere auch aus Kunststoff gefertigt sein kann. Die das Dekorprofil lastfrei haltende Konstruktion ermöglicht ferner den Einsatz von Materialien, Profilquerschnitten, Befestigungsmitteln und Fertigungsverfahren, die für ein lastaufnehmendes Profil nicht geeignet wären, etwa das Spritzgießen des Dekorprofils insbesondere auch aus weniger belastbaren Kunststoffen und das Verkleben von Dekorprofil und Relingprofil.

Die am Dekorprofil ausgebildete Dekorfläche kann insbesondere eloxiert, lackiert oder folienbeschichtet sein. Es kann aber selbstverständlich auch vorgesehen sein, dass das Material, welches das Dekorprofil bildet, auch die Dekorfläche selbst bildet. Das Material des Dekorprofils kann zur Bildung der Dekorfläche poliert oder eine gezielt eingebrachte Oberflächenstruktur aufweisen.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt
- Fig. 1: eine Dachreling in einer perspektivischen Gesamtansicht,
- Fig. 2a: eine Schnittansicht einer ersten möglichen Ausgestaltung der in Figur 1 gezeigten Dachreling,
- Fig. 2b: eine Seitenansicht der in Figur 2a gezeigten Dachrehling im Schnitt, und
- Fig. 3: eine Schnittansicht einer zweiten möglichen Ausgestaltung der in Figur 1 gezeigten Dachreling.

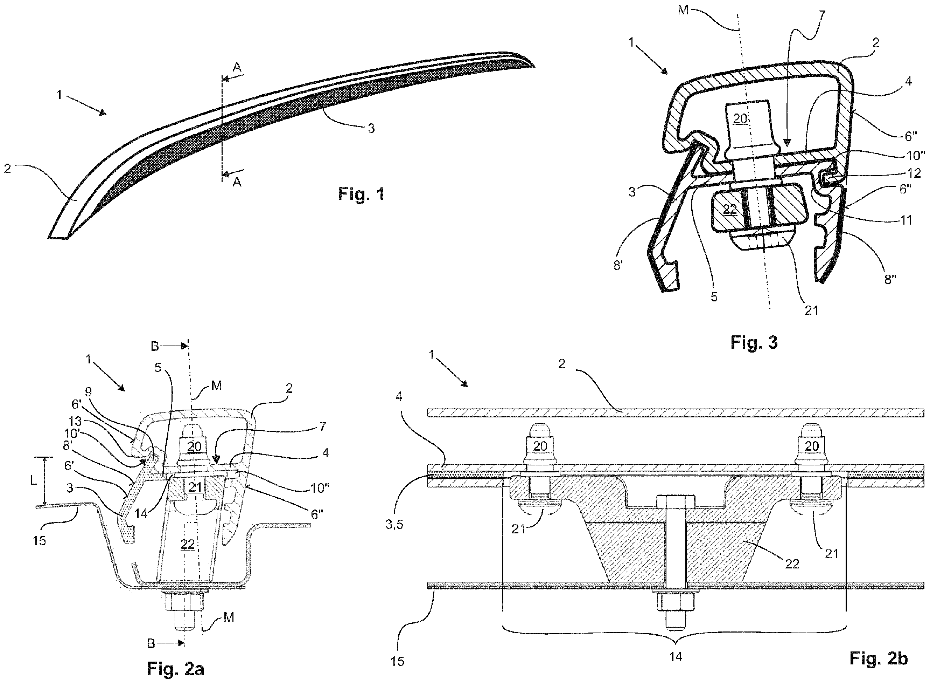

In Figur 1 ist eine Dachreling 1 gezeigt, die bei bestimmungsgemäßer Montage auf der Dachstruktur 15 eines Kraftfahrzeugdachs durchgehend aufliegt oder zumindest derart auf diesem angeordnet ist, dass ein derartiger Eindruck erweckt wird. Die Dachreling 1 ist längsgeteilt und weist ein leistenförmiges Relingprofil 2 als Oberteil sowie ein leistenförmiges Dekorprofil 3 als Unterteil auf, durch das eine seitliche Dekorfläche (in Figur 1 kreuzschraffiert dargestellt auf) realisiert wird. Diese Mehrteiligkeit der aus mehreren Profilleisten bestehenden Dachreling 1 ist aus Figur 1 nicht unmittelbar ersichtlich.

Figur 2a und Figur 3 verdeutlichen zwei alternative mögliche Ausgestaltungen des Aufbaus der in Figur 1 gezeigten längsgeteilten Dachreling 1 in einer Schnittdarstellung gemäß dem in Figur 1 angedeuteten Schnitt A-A. In Figur 2b ist die in Figur 2a dargestellte Dachreling in einer Seitenansicht gemäß dem in Figur 2a angedeuteten Schnitt B-B gezeigt.

Zur Befestigung der in Figur 2a/2b und Figur 3 gezeigten Dachreling 1 sind Befestigungsmittel vorgesehen, mittels derer die Dachreling 1 an einer Dachstruktur eines Kraftfahrzeugs befestigt werden kann und über die auf das Relingprofil 2 wirkende Lasten in die Dachstruktur 15 abgeleitet werden. In Figur 2a und Figur 3 bildet die Dachstruktur 15 beispielhaft einen Dachkanal aus, innerhalb dem die Dachreling 1 gegenüber der umgebenden Dachaußenhaut leicht versenkt angeordnet ist. Zu den Befestigungsmitteln gehören bei den in Figur 2a/2b und Figur 3 dargestellten Ausführungsformen beispielhaft eine Nietmutter 20, eine Schraube 21 und die insbesondere aus Figur 2a und 2b ersichtliche Adapterbrücke 22, die in Figur 3 nur zum Teil dargestellt ist. Die Adapterbrücke 22 weist nur in Figur 2a/2b unmittelbar ersichtliche Schenkel auf, die wiederum über eine Verschraubung an der Dachstruktur befestigt sind. Die Dachreling 1 stützt sich so über die Adapterbrücke 22 unmittelbar auf der Dachstruktur des Kraftfahrzeugs ab.

Wie insbesondere aus Figur 2a und Figur 3 ersichtlich, ist die Dachreling 1 mehrteilig aufgebaut und weist ein leistenförmiges, stranggepresstes Relingprofil 2 als Oberteil und ein ebenfalls leistenförmiges Dekorprofil 3 als ein Unterteil auf. Das Relingprofil 2 hat einen Befestigungsschenkel 4, an dem die Befestigungsmittel angreifen und über den eine etwaige Traglast über die Befestigungsmittel auf die Dachstruktur weitergeleitet wird.

Bei der in Figur 2a/2b gezeigten Ausführungsform stützt sich das Relingprofil über die Befestigungsmittel auf der Dachstruktur 15 ab, während das Dekorprofil 3 mit anderen Mitteln an dem Relingprofil 2 befestigt ist. Das Dekorprofil 3 kann insbesondere mit dem Relingprofil 2 verklebt sein oder aber über Schraub- oder Nietverbindungen an dem Relingprofil 2 vorfixiert sein. Die lastfreie Ausgestaltung des Dekorprofils hat den Vorteil, dass auch Dekorprofilquerschnitte wie das aus Figur 2a ersichtliche zum Einsatz kommen können, die lediglich einseitig eine Dekorfläche ausbilden.

Bei der in Figur 3 gezeigten Ausführungsform liegt ein Montageschenkel 5 des Dekorprofils 3 unterseitig an dem Befestigungsschenkel 4 an und ist über dieselben Befestigungsmittel, über die sich das Relingprofil 2 an der Dachstruktur abstützt, mit dem Relingprofil 2 verbunden.

Relingprofil 2 und Dekorprofil 3 ergänzen sich so zu einem Gesamtprofilquerschnitt mit einer ersten Seitenfläche 6' und einer zweiten Seitenfläche 6". Der Befestigungsschenkel 4 und der Montageschenkel 5 bilden dabei in Bezug auf den Gesamtquerschnitt gemeinsam einen horizontal ausgerichteten Mittelsteg 7, der den Abstand zwischen der ersten Seitenfläche 6' und der zweiten Seitenfläche 6" überbrückt.

Das Dekorprofil 3 überbrückt ferner unter Bildung eines unteren Teils der ersten Seitenfläche 6' mit einem ersten Seitenschenkel 8' einen vertikalen optischen Abstand L einer äußeren Sichtkante des Relingprofils 2 zur Dachaußenhaut. Die nach außen weisende Oberfläche des Seitenschenkels 8' bildet dabei die in Figur 1 kreuzschraffiert eingezeichnete Dekorfläche, die in der in Figur 3 dargestellten Schnittansicht als Beschichtung ausgebildet ist und schwarz hinterlegt hervorgehoben ist, während diese Oberfläche in dem in Figur 2a gezeigten Ausführungsbeispiel von dem Material des Dekorprofils selbst gebildet ist.

Figur 2a und Figur 3 zeigen, dass sich der Montageschenkel 5 des Dekorprofils 2 ausgehend von dem ersten Seitenschenkel 8' nach innen erstreckt, wobei der Montageschenkel 5 unterhalb des oberen Endes des Seitenschenkels 8' innenseitig am Seitenschenkel 8' ansetzt. Hierdurch bildet das obere Ende des Seitenschenkels 8' einen Eingriffsschenkel 9, der in eine sich längs des Relingprofils 2 erstreckende und nach außen weisende erste nutartige Vertiefung 10' eingreift. Der Montageschenkel 5 selbst taucht mit seinem dem ersten Seitenschenkel 8' abgewandten Ende ebenfalls ein eine zweite am Relingprofil 2 vorgesehene nutartige Aufnahme 10" ein.

Im Gegensatz zu dem in Figur 2a/2b dargestellten Ausführungsbeispiel weist das in Figur 3 dargestellte Ausführungsbeispiel ein Dekorprofil 3 in Form eines umgedrehten U auf, das beidseitig einer gedachten Mittelebene M eine Dekorfläche bildet. Der Aufbau des in Figur 3 auf der linken Seite der gedachten Mittelebene M befindlichen Teils des Dekorprofils entspricht dem in Figur 2a gezeigten. Auf der dem ersten Seitenschenkel 8' abgewandten Seite (rechts in Figur 3) geht der Montageschenkel 5 unter Bildung einer nach außen weisenden nutartigen Vertiefung 11, in die ein am Relingprofil ausgebildeter und nach innen weisender, weitgehend horizontal ausgerichteter Eingriffsschenkel 12 eingreift, in einen zweiten Seitenschenkel 8" über, der unter Bildung einer weiteren Dekorfläche die zweite äußere Seitenfläche 6"des Gesamtprofilquerschnitts nach unten hin ergänzt. Durch eine derartige Anordnung des Dekorprofils 3 unterhalb des Relingprofils 2 kann bei gleichzeitig hochfester Verbindung von Relingprofil 2 und Dekorprofil 3 und auch bei Verwendung verschiedener Materialien auf beiden Seiten der Dachreling 1 eine Dekorfläche geschaffen werden.

Den in Figur 2a/2b und Figur 3 gezeigten Ausführungen ist gemein, dass das Dekorprofil 3 jeweils lastfrei mit dem lastaufnehmenden Relingprofil 2 verbunden ist. Dies bedeutet, dass die auf das Relingprofil 2 wirkenden Lasten (statische oder dynamische Gewichts- und/oder (Quer-)Beschleunigungskräfte) über die Befestigungsmittel direkt und ohne einen "Umweg" über das Dekorprofil 3 in die Dachstruktur und damit in die die Lasten abstützende Fahrzeugstruktur eingeleitet ist. Hierdurch ist es möglich, das Dekorprofil losgelöst von etwaigen Belastungsfällen zu gestalten, da es ausschließlich dekorative Funktionen zu erfüllen hat und keine tragende Funktion ausübt.

Durch diese Konstruktion ist es auch möglich, das Dekorprofil 3 aus Materialien und/oder mit Materialstärken und/oder mittels Fertigungsverfahren herzustellen, die für einen Fall, in dem das Dekorprofil lasttragende Funktionen zu übernehmen hätte, nicht geeignet wären. So kann als Dekorprofil beispielsweise auch ein spritzgegossenes oder pressgeformtes Kunststoffprofil mit eher dünner Materialstärke zum Einsatz kommen.

Die Ausgestaltungen in Figur 2a/2b und in Figur 3 unterscheiden sich dahingehend, dass bei der Ausführungsform nach Figur 2a/2b im Montageschenkel 5 des Dekorprofils eine Aussparung 14 vorgesehen ist, durch die ein Verbindungsabschnitt, im Bereich dessen die Befestigungsmittel am Befestigungsschenkel 4 des Relingprofils 2 angreifen, um das Relingprofil 2 mit der Dachstruktur zu verbinden, von dem Dekorprofil 2, insbesondere von dessen Montageschenkel, freigehalten ist.

Demgegenüber zeigt Figur 3 eine Ausführungsform, bei der diese Aussparungen nicht vorgesehen sind. Hier durchgreifen die Befestigungsmittel (im Ausführungsbeispiel die Schraube 21 sowie die Nietmutter 20) sowohl Befestigungsschenkel 4 des Relingprofils 2 als auch den Montageschenkel 5 des Dekorprofils 3. Dabei ist außerdem das Dekorprofil 3 schon vor der Montage der Dachreling 1 an der Dachstruktur über ein Befestigungsmittel, das gleichzeitig auch der Befestigung des Relingprofils an der Dachstruktur dient (im Ausführungsbeispiel die Nietmutter 20), an dem Relingprofil vorfixiert. Hierdurch wird die Montage erheblich erleichtert.

### Bezugszeichenliste

- 1: Dachreling
- 2: Relingprofil
- 3: Dekorprofil
- 4: Befestigungsschenkel
- 5: Montageschenkel
- 6', 6": Seitenflächen
- 7: Mittelsteg
- 8', 8": Seitenschenkel des Dekorprofils
- 9: Eingriffsschenkel am Dekorprofil
- 10', 10": nutartige Vertiefung/Aufnahme am Relingprofil
- 11: nutartige Vertiefung am Dekorprofil
- 12: Eingriffsschenkel am Relingprofil
- 13: äußere Sichtkante
- 14: Aussparung
- 15: Dachstruktur
- 20: Nietmutter
- 21: Schraube
- 22: Adapterbrücke
- M: gedachte Mittelebene

## Patentansprüche

1. Dachreling, eingerichtet zur Befestigung an einer Dachstruktur eines Kraftfahrzeugs, umfassend ein Relingprofil (2) und in wenigstens einem Teilabschnitt ein Dekorprofil (3) zur Bildung wenigstens einer ersten Dekorfläche, **dadurch gekennzeichnet, dass** das Relingprofil (2) einen Befestigungsschenkel (4) aufweist, an dem bei bestimmungsgemäßer Anbringung der Dachreling (1) an der Dachstruktur (15) Befestigungsmittel angreifen, um das Relingprofil (2) an der Dachstruktur (15) festzulegen, und das Dekorprofil (3) lastfrei über den Befestigungsschenkel (4) mit dem Relingprofil (2) verbunden ist.

2. Dachreling nach Anspruch 1, **dadurch gekennzeichnet, dass** zumindest auch mittels der Befestigungsmittel, mit dem das Relingprofil (2) an der Dachstruktur befestigt ist, auch das Dekorprofil (3) mit dem Relingprofil (2) verbunden ist.

3. Dachreling nach Anspruch 1 oder Anspruch 2, **dadurch gekennzeichnet, dass** am Dekorprofil (3) wenigstens eine Aussparung (14) vorgesehen ist, durch die die Befestigungsmittel, mit denen das Relingprofil (2) mit der Dachstruktur befestigt ist, hindurchgreifen, ohne das Dekorprofil (3) gleichzeitig mit dem Relingprofil (2) zu verbinden.

4. Dachreling nach einem der vorhergehenden Ansprüche, **dadurch gekennzeichnet, dass** das Dekorprofil (3) in wenigstens dem Teilabschnitt einen Dekorprofilquerschnitt mit einem nach innen weisenden Montageschenkel (5) aufweist, der am Befestigungsschenkel (4) anliegt.

5. Dachreling nach einem der vorhergehenden Ansprüche, **dadurch gekennzeichnet, dass** wenigstens in dem Teilabschnitt, in dem das Dekorprofil (3) vorgesehen ist, ein vertikaler Abstand L einer unteren Sichtkante des Relingprofils (2) zur Dachaußenhaut durch das Dekorprofil (3) überbrückt wird.

6. Dachreling nach einem der vorherigen Ansprüche, **dadurch gekennzeichnet, dass** das Relingprofil (2) einen Relingprofilquerschnitt und das Dekorprofil (3) einen Dekorprofilquerschnitt aufweisen, die sich zusammen zu einem Gesamtprofilquerschnitt mit zwei im Wesentlichen vertikal ausgerichteten Seitenflächen (6', 6") und einem im Wesentlichen horizontal ausgerichteten Mittelschenkel (7) bilden, wobei der Mittelschenkel (7) zumindest zum Teil von dem Befestigungsschenkel (4) des Relingprofils (2) gebildet ist.

7. Dachreling nach einem der beiden vorhergehenden Ansprüche, **dadurch gekennzeichnet, dass** das Dekorprofil (3) einen Dekorprofilquerschnitt mit einem die äußere Dekorfläche bildenden ersten Seitenschenkel (8') aufweist, von dem ausgehend sich der Montageschenkel (5) nach innen erstreckt.

8. Dachreling nach einem der vorhergehenden Ansprüche, **dadurch gekennzeichnet, dass** das Relingprofil (2) und/oder das Dekorprofil (3) wenigstens eine nutartige Vertiefung aufweist, in die ein Eingriffsschenkel (9, 12) des jeweils anderen Profils eintaucht.

9. Dachreling nach einem der vorhergehenden Ansprüche, **dadurch gekennzeichnet, dass** ein erster Seitenschenkel (8') den Montageschenkel (5) oberseitig unter Bildung eines Eingriffsschenkels (9) überragt und in eine am Relingprofil (2) vorgesehene nutartige Vertiefung (10') eintaucht.

10. Dachreling nach einem der vorhergehenden Ansprüche, **dadurch gekennzeichnet, dass** der Montageschenkel (5) an seinem die Dekorfläche bildenden ersten Seitenschenkel (8') abgewandten Ende einen Eingriffsschenkel bildet, der in eine am Relingprofil (2) vorgesehene und nach innen weisende nutartige Aufnahme (10") eintaucht.

11. Dachreling nach einem der vorhergehenden Ansprüche, **dadurch gekennzeichnet, dass** am Dekorprofil (3) eine nach außen weisende nutartige Vertiefung (11) ausgebildet ist, in die ein am Relingprofil (2) ausgebildeter und nach innen weisender Eingriffsschenkel (12) eintaucht.

12. Dachreling nach einem der vorhergehenden Ansprüche, **dadurch gekennzeichnet, dass** das Dekorprofil (3) unterhalb des Relingprofils (2) angeordnet ist.

13. Dachreling nach einem der vorhergehenden Ansprüche, **dadurch gekennzeichnet, dass** das Dekorprofil (3) auf einer Seite einer Mittelebene M des Relingprofils (2) eine erste Dekorfläche ausbildet und auf der anderen Seite der Mittelebene M des Relingprofils (2) eine zweite Dekorfläche ausbildet.

14. Dachreling nach einem der Ansprüche 1 bis 12, **dadurch gekennzeichnet, dass** das Dekorprofil (3) derart ausgebildet ist, dass es nur einseitig einer Mittelebene M des Relingprofils (2) eine Dekorfläche ausbildet.

15. Kraftfahrzeug mit einer Dachreling nach einem der vorhergehenden Ansprüche.

## Claims

1. Roof rail, equipped for fitting to a roof structure of a motor vehicle, comprising a rail profile (2) and a decorative profile (3) for forming at least one first decorative surface in at least one part section,
wherein the rail profile (2) has a fitting leg (4), which is engaged by fitting means when the roof rail (1) is attached to the roof structure (15) as intended for fixing the rail profile (2) to the roof structure (15),
**characterised in that**
the decorative profile (3) is connected with the rail profile (2) unencumbered via the fitting leg (4).

2. Roof rail according to claim 1, **characterised in that** at least the decorative profile (3) is also connected with the rail profile (2) by means of the fitting means, with which the rail profile (2) is also fitted to the roof structure.

3. Roof rail according to claim 1 or claim 2, **characterised in that** at least one recess (14) is provided in the decorative profile (3), through which the fitting means with which rail profile (2) is fitted to the roof structure reach without simultaneously connecting the decorative profile (3) with the rail profile (2).

4. Roof rail according to one of the proceeding claims, **characterised in that** the decorative profile (3) has a decorative profile cross-section with an inwardly facing installation leg (5), which lies against the fitting leg (4), in at least one part section.

5. Roof rail according to one of the proceeding claims, **characterised in that** a vertical distance L of a lower visible edge of the rail profile (2) is bridged through the decorative profile (3) towards the outer roof skin at least in the part section in which the decorative profile (3) is provided.

6. Roof rail according to one of the previous claims, **characterised in that** the rail profile (2) has a rail profile cross-section and the decorative profile (3) has a decorative profile cross-section, which together form an overall profile cross-section with two substantially vertically aligned side surfaces (6', 6") and a substantially horizontally aligned central leg (7), wherein the central leg (7) is formed at least in part by a fitting means (4) of the rail profile (2).

7. Roof rail according to one of the two preceding claims, **characterised in that** the decorative profile (3) has a decorative profile cross-section with a first side leg (8') forming the outer decorative surface, starting from which the installation leg (5) extends inwards.

8. Roof rail according to one of the proceeding claims, **characterised in that** the rail profile (2) and/or the decorative profile (3) has at least one groove-like deepening, in which an engagement leg (9, 12) of the respective other profile is submersed.

9. Roof rail according to one of the proceeding claims, **characterised in that** a first side leg (8') protrudes further than the installation leg (5) at the top whilst forming an engagement leg (9), and is submersed in a groove-like deepening (10') provided in the rail profile (2).

10. Roof rail according to one of the proceeding claims, **characterised in that** the Installation leg (5) forms an engagement leg at its end facing away from the first side leg (8') forming the first decorative surface, which is submersed in a groove-like take-up (10") provided in the rail profile (2) and faces inwards.

11. Roof rail according to one of the proceeding claims, **characterised in that** an outwardly facing groove-like deepening (11) is formed on the decorative profile (3), in which an engagement leg (12) formed on the rail profile (2) and facing inwards is submersed.

12. Roof rail according to one of the proceeding claims, **characterised in that** the decorative profile (3) is arranged below the rail profile (2).

13. Roof rail according to one of the proceeding claims, **characterised in that** the decorative profile (3) forms a first decorative surface on one side of a central plane M of the rail profile (2), and forms a second decorative surface on the other side of the central plant M of the rail profile (2).

14. Roof rail according to one of the claims 1 to 12, **characterised in that** the decorative profile (3) is designed in such a way that it forms a decorative surface on just one side of a central plane M of the rail profile (2).

15. Motor vehicle with a roof rail according to one of the preceding claims.

## Revendications

1. Galerie de toit, conçue pour être fixée à une structure de toit d'un véhicule, comprenant un profil de galerie (2) et un profil décoratif (3) en au moins une section pour former au moins une première surface décorative,
le profil de galerie (2) présentant une branche de fixation (4) à laquelle des moyens de fixation se mettent en prise lors d'une installation conforme de la galerie de toit (1) sur la structure de toit (15), afin de fixer le profil de galerie (2) à la structure de toit (15), **caractérisée en ce que**
le profil décoratif (3) est raccordé exempt de charge au profil de galerie (2) par la branche de fixation (4).

2. Galerie de toit selon la revendication 1, **caractérisée en ce qu'**au moins le profil décoratif (3) est raccordé également au profil de galerie (2) à l'aide aussi des moyens de fixation avec lesquels le profil de galerie (2) est fixé à la structure de toit.

3. Galerie de toit selon la revendication 1 ou la revendication 2, **caractérisée en ce qu'**au moins un renforcement (14) est prévu sur le profil décoratif (3), renforcement à travers lequel les moyens de fixation, avec lesquels le profil de galerie (2) est fixé à la structure de toit, s'engagent sans raccorder simultanément le profil décoratif (3) au profil de galerie (2).

4. Galerie de toit selon l'une quelconque des revendications précédentes, **caractérisée en ce que** le profil décoratif (3) présente en au moins une section une section transversale de profil décoratif avec un bras de montage (5) orienté vers l'intérieur qui est plaqué sur la branche de fixation (4).

5. Galerie de toit selon l'une quelconque des revendications précédentes, **caractérisée en ce qu'**au moins dans la section, dans laquelle le profil décoratif (3) est prévu, un écart vertical L d'un bord visible inférieur du profil de galerie (2) par rapport à la couverture extérieure du toit est comblé par le profil décoratif (3).

6. Galerie de toit selon l'une quelconque des revendications précédentes, **caractérisée en ce que** le profil de galerie (2) et le profil décoratif (3) présentent respectivement une section transversale de profil de galerie et une section transversale de profil décoratif qui forment ensemble une section transversale de profil totale avec deux surfaces latérales (6', 6") orientées de manière sensiblement verticale et avec une branche centrale (7) orientée de manière sensiblement horizontale, la branche centrale (7) étant formée au moins en partie par la branche de fixation (4) du profil de galerie (2).

7. Galerie de toit selon l'une quelconque des deux revendications précédentes, **caractérisée en ce que** le profil décoratif (3) présente une section transversale de profil décoratif avec une première branche latérale (8') formant une surface décorative extérieure à partir de laquelle s'étend le bras de montage (5) vers l'intérieur.

8. Galerie de toit selon l'une quelconque des revendications précédentes, **caractérisée en ce que** le profil de galerie (2) et/ou le profil décoratif (3) présentent au moins une cavité en forme de rainure dans laquelle une branche de mise en prise (9, 12) de l'autre profilé respectif s'introduit.

9. Galerie de toit selon l'une quelconque des revendications précédentes, **caractérisée en ce qu'**une première branche latérale (8') dépasse le bras de montage (5) côté inférieur formant une branche de mise en prise (9) et s'introduit dans une cavité (10') en forme de rainure prévue sur le profil de galerie (2).

10. Galerie de toit selon l'une quelconque des revendications précédentes, **caractérisée en ce que** le bras de montage (5) forme une branche de mise en prise à son extrémité opposée à la première branche latérale (8') formant la surface décorative, branche de mise en prise qui s'introduit dans un logement (10") en forme de rainure prévu sur le profil de galerie (2) et orienté vers l'intérieur.

11. Galerie de toit selon l'une quelconque des revendications précédentes, **caractérisée en ce que** sur le profil décoratif (3) est formée une cavité en forme de rainure (11) orientée vers l'intérieur dans laquelle s'introduit une branche de mise en prise (12) formée sur le profil de galerie (2) et orientée vers l'intérieur.

12. Galerie de toit selon l'une quelconque des revendications précédentes, **caractérisée en ce que** le profil décoratif (3) est disposé en dessous du profil de galerie (2).

13. Galerie de toit selon l'une quelconque des revendications précédentes, **caractérisée en ce que** le profil décoratif (3) forme une première surface décorative sur un côté d'un plan médian M du profil de galerie (2) et forme une deuxième surface décorative sur l'autre côté du plan médian M du profil de galerie (2).

14. Galerie de toit selon l'une quelconque des revendications 1 à 12, **caractérisée en ce que** le profil décoratif (3) est formé de telle sorte qu'il ne forme qu'une surface décorative unilatérale d'un plan médian M du profil de galerie (2).

15. Véhicule doté d'une galerie de toit selon l'une quelconque des revendications précédentes.
